Europäisches Patentamt

European Patent Office

Office européen des brevets

(19)

(11) **EP 1 489 393 A2**

(12) **EUROPÄISCHE PATENTANMELDUNG**

(43) Veröffentlichungstag:
　　22.12.2004　Patentblatt 2004/52

(51) Int Cl.⁷: **G01F 23/284**, G01F 23/22,
　　G01F 15/07

(21) Anmeldenummer: 04012546.0

(22) Anmeldetag: 27.05.2004

(84) Benannte Vertragsstaaten:
　　**AT BE BG CH CY CZ DE DK EE ES FI FR GB GR
　　HU IE IT LI LU MC NL PL PT RO SE SI SK TR**
　　Benannte Erstreckungsstaaten:
　　**AL HR LT LV MK**

(30) Priorität: **03.06.2003　DE 10325267**

(71) Anmelder: **Endress + Hauser GmbH + Co. KG.
　　79689 Maulburg (DE)**

(72) Erfinder:
　　• **Schroth, Herbert, Dr.
　　　79650 Schopfheim-Wiechs (DE)**
　　• **Deserno, Rolf, Dr.
　　　79689 Maulburg (DE)**

(74) Vertreter: **Andres, Angelika
　　Endress + Hauser (Deutschland) Holding GmbH,
　　PatServe,
　　Patent Abteilung,
　　Colmarer Strasse 6
　　79576 Weil am Rhein (DE)**

(54) **Anordnung und Verfahren zur Füllstandsmessung**

(57)　Es ist eine Anordnung zur Füllstandsmessung vorgesehen, mit der eine auf Dauer zuverlässige genaue Füllstandsmessung möglich ist, mit einem mit einem Füllgut(1 ), dessen Füllstand zu messen ist, gefüllten Behälter (3), einem am Behälter (3) angeordneten nach dem Laufzeitprinzip arbeitenden Füllstandsmeßgerät (5), einer Vorrichtung (11, 13) zur Erfassung eines Befüllens und/oder Entleerens des Behälters (3), einer Hilfseinheit (19), die mittels des von der Vorrichtung (11, 13) erfaßten Befüllens und/oder Entleerens eine momentane Füllstandsänderung ($V_L$) oder einen momentanen Materialfluß bestimmt und dem Füllstandsmeßgerät (5) zur Bestimmung des zu messenden Füllstandes (L) zur Verfügung stellt.

Fig. 1

EP 1 489 393 A2

**Beschreibung**

Die Erfindung betrifft eine Anordnung zur Füllstandsmessung und ein Verfahren zur Füllstandsmessung. Bei der Füllstandsmessung wird ein Füllstand eines Füllgutes in einem Behälter erfaßt.

Füllstandsmessungen werden in einer Vielzahl von Industriezweigen eingesetzt, z.B. in der verarbeitenden Industrie, in der Chemie oder in der Lebensmittelindustrie. Die Füllstandsmessungen werden dabei z.B. zur Steuerung und/oder Regelung von Herstellungs- und/oder Verarbeitungsprozessen herangezogen.

In der Füllstandsmeßtechnik sind drei gängige Typen der Füllstandsmessung bekannt. Diese drei Typen unterscheiden sich nach einer Art einer Meßgröße, die bei der Messung aufgenommen wird. Die verschiedenen Meßgrößen lassen sich in integrale, differentielle und diskrete Meßgrößen unterteilen.

Eine integrale Meßgröße, ist z.B. ein Differenzdruck zwischen einem Boden und einem Deckel des Behälters. Der Differenzdruck ändert sich abhängig vom Füllstand. Eine weitere integrale Größe ist eine sich mit dem Füllstand ändernde Kapazität zwischen einer in den Behälter hineinragenden Elektrode und dem Behälter.

Wird eine integrale Meßgröße zur Füllstandsmessung herangezogen, so besteht jedoch die Gefahr, daß Materialparameter, die in die Füllstandsbestimmung eingehen, z.B. eine Dichte des Füllguts, wenn der Füllstand durch eine Differenzdruckmessung ermittelt werden soll, oder eine Dielektrizitätskonstante des Füllguts, wenn der Füllstand durch Kapazitätsmessung bestimmt werden soll, entweder vorab nicht genau bekannt sind, oder aber schwanken können.

Eine differentielle Meßgröße, die zur Füllstandsbestimmung eingesetzt werden kann, ist z.B. ein Materialfluß in den Behälter hinein und/oder aus dem Behälter heraus. Dieser kann z.B. durch Durchflußmeßgeräte erfaßt werden. Mit Durchflußmeßgeräten lassen sich Füllstandsänderungen genauer erfassen als mit Füllstandsmeßgeräten, da sich ein hierbei auftretender Meßfehler nur auf die fließende Materialmenge und nicht auf die gesamte Füllgutmenge bezieht.

Ist zu einem Startzeitpunkt der Füllstand bekannt, so kann aus dem Materialfluß durch Integration ein Füllstand zu einem späteren Zeitpunkt bestimmt werden.

Allerdings können sich bei der Intergration systematische Meßfehler aufaddieren, so daß auf lange Sicht eine wachsende Meßunsicherheit entsteht.

Daneben besteht die Möglichkeit einen Füllstand durch diskrete Meßgrößen zu bestimmen. Die für eine kontinuierliche Füllstandsmessung bedeutsamste diskrete Meßgröße ist die Lage einer Oberfläche des Füllguts. Diese Lage kann z.B. durch nach dem Laufzeitprinzip arbeitende Füllstandsmeßgeräte bestimmt werden. Dabei werden Signale, z.B. elektromagnetische Signale oder Ultraschallsignale, zur Oberfläche gesendet und deren Echosignale wieder empfangen. Es wird eine Laufzeit bis zur Oberfläche und zurück bestimmt und daraus die Lage der Oberfläche bestimmt.

Es sind heute eine Vielzahl solcher Verfahren im Einsatz, z.B. das Puls-Radar Verfahren, das frequenzmodulierte Dauerstrich-Radar Verfahren (Frequency Modulated Continuous Wave (FMCW)) und die Time-Domain-Reflektometrie.

Beim Puls-Radar Verfahren werden z.B. periodisch kurze Sendepulse, in der Regel Mikrowellenpulse, mittels einer Antenne zur Oberfläche eines Füllguts gesendet und die an der Oberfläche reflektierten Echosignale nach einer abstandsabhängigen Laufzeit wieder empfangen. Es wird eine die Echoampliduden als Funktion der Laufzeit darstellende Echofunktion gebildet.

Jeder Wert dieser Echofunktion entspricht der Amplitude eines in einem bestimmten Abstand von der Antenne reflektierten Echos.

Aus der Echofunktion wird ein Nutzecho bestimmt, das der Reflexion eines Sendepulses an der Füllgutoberfläche entspricht. Dabei wird in der Regel angenommen, daß das Nutzecho, eine größere Amplitude aufweist als die übrigen Echos. Aus der Laufzeit des Nutzechos ergibt sich bei einer festen Ausbreitungsgeschwindigkeit der Sendepulse unmittelbar der Abstand zwischen der Füllgutoberfläche und der Antenne.

Üblicherweise wird nicht ein empfangenes Rohsignal zur Auswertung herangezogen, sondern aus dem Rohsignal eine Echokurve abgeleitet, die dann ausgewertet wird. Beim Puls-Radar-Verfahren ist die Echokurve z.B. eine aus dem Rohsignal abgeleitete Hüllkurve. Die Hüllkurve wird erzeugt, indem das Rohsignal gleichgerichtet und gefiltert wird. Beim frequenzmodulierten Dauerstrich-Radar-Verfahren ist die Echokurve z.B. ein aus dem Rohsignal abgeleitetes Frequenzspektrum. Zur genauen Bestimmung einer Laufzeit des Nutzechos wird zuerst ein Maximum der Echokurve bestimmt.

Die Füllstandsmessung nach dem Laufzeitprinzip hängt nur von der konstanten Ausbreitungsgeschwindigkeit der Signale ab und liefert daher sehr genaue Meßergebnisse.

Allerdings bestehen bei der Füllstandmessung nach dem Laufzeitprinzip Schwierigkeiten, wenn beispielsweise durch Einbauten im Behälter oder durch Mehrfachreflektionen der Signale mehrere Echos vorliegen.

Mehrfachreflexionen entstehen z.B., wenn ein Sendepuls mehrmals zwischen der Füllgutoberfläche und einem Behälterdeckel hin- und her reflektiert wird.

Die Meßergebnisse sind somit sofern das richtige Echo erkannt wird sehr genau. Wird das richtige Echo jedoch nicht zweifelsfrei erkannt, tritt eine sehr große Meßunsicherheit auf. Plausible Angaben über maximale Befüll- und Entleerungsgeschwindigkeiten oder über relative Stärken von Signalen können zwar in einigen Fällen die Auswahl des richtigen Echos sicherstellen; wegen der Vielzahl der unterschiedlichen Meßsituationen können damit aber nicht alle möglichen Fälle abgedeckt werden.

Es ist eine Aufgabe der Erfindung, eine Anordnung und ein Verfahren zur Füllstandsmessung anzugeben, mit der bzw. bei dem eine auf Dauer zuverlässige genaue Füllstandsmessung möglich ist.

Hierzu besteht die Erfindung in einer Anordnung zur Füllstandsmessung mit

- einem mit einem Füllgut, dessen Füllstand zu messen ist, gefüllten Behälter,
- einem am Behälter angeordneten nach dem Laufzeitprinzip arbeitenden Füllstandsmeßgerät,
- einer Vorrichtung zur Erfassung eines Befüllens und/oder Entleerens des Behälters,
- einer Hilfseinheit, die mittels des von der Vorrichtung erfaßten Befüllens und/oder Entleerens eine momentane Füllstandsänderung oder einen momentanen Materialfluß bestimmt und dem Füllstandsmeßgerät zur Bestimmung des zu messenden füllstandes zur Verfügung stellt.

Gemäß einer Ausgestaltung umfaßt die Vorrichtung zur Erfassung des Befüllens- und/oder Entleerens mindestens ein Durchflußmeßgerät, eine Befüll- und/oder Entleerpumpe, oder eine Fördereinrichtung.

Gemäß einer Ausgestaltung weist das Füllstandsmeßgerät

- mindestens einen Signaleingang auf, über den dem Füllstandsmeßgerät externe Informationen über die momentane Füllstandsänderung oder den momentanen Materialfluß zuführbar sind, und
- eine Signalverarbeitung auf, die aus einem Meßsignal und der momentanen Füllstandsänderung oder dem momentanen Materialfluß den zu messenden Füllstand bestimmt.

Weiter besteht die Erfindung in einem Verfahren zur Füllstandsmessung mit einer Anordnung zur Füllstandmessung mit

- einem auf dem Behälter angeordneten nach dem Laufzeitprinzip arbeitenden Füllstandsmeßgerät,
- einer Vorrichtung zur Erfassung eines Befüllens und/oder Entleerens des Behälters, und
- einer Hilfseinheit, die mittels des von der Vorrichtung erfaßten Befüllens und/oder Entleerens die momentane Füllstandsänderung oder den momentanen Materialfluß bestimmt, bei dem
- ein Sendesignal zum Füllgut gesendet wird,
- dessen Echosignal aufgenommen wird,
- mindestens ein Echo des Echosignals bestimmt wird,
- aus einer Laufzeit dieses bzw. dieser Echos ein vorläufiger Füllstand bestimmt wird,
- aus dem vorläufigen Füllstand und mindestens einem weiteren in einem vorangegangenen Meßzyklus gemessenen Füllstand eine gemessene Füllstandänderung bestimmt wird,
- eine Abweichung zwischen der gemessenen Füllstandsänderung und der momentanen Füllstandsänderung bestimmt wird und
- wenn die Abweichung eine vorgegebene Obergrenze übersteigt, mindestens ein anderes Echo als wahrscheinlich an der Füllgutoberfläche reflektiertes Echo bestimmt wird, und
- dieses Verfahren so lange wiederholt wird, bis

-- ein Echo gefunden ist, bei dem die Abweichung unterhalb der vorgegebenen Obergrenze liegt und der diesem Echo entsprechende vorläufige Füllstand als gemessener Füllstand akzeptiert wird, oder bis
-- eine Abbruchbedingung eintritt.

Gemäß einer Weiterbildung des Verfahrens wird, für den Fall, daß die Abbruchbedingung eintritt in einen Sicherheitsmodus geschaltet, oder es wird bei bekannter momentaner Füllstandsänderung der zu messende Füllstand aus dem zuvor gemessenen Füllstand und der momentanen Füllstandsänderung extrapoliert, und es wird bei unbekannter momentaner Füllstandsänderung der zu messende Füllstand gleich dem zuvor gemessenen Füllstand gesetzt.

Gemäß einer Weiterbildung des Verfahrens wird in jedem Meßzyklus das wahrscheinlich an der Füllgutoberfläche reflektierte Echo innerhalb eines Fensters gesucht, wobei die Lage des Fensters durch die dem zuvor gemessenen Füllstand entsprechende Laufzeit gegeben ist.

Gemäß einer Weiterbildung des Verfahrens wird für den Fall, daß innerhalb des Fensters kein Echo gefunden werden kann, das zu einem gemessenen füllstand führt,

- bei bekannter momentaner Füllstandsänderung der zu messende Füllstand aus dem zuvor gemessenen Füllstand und der momentanen Füllstandsänderung extrapoliert, und
- bei unbekannter momentaner Füllstandsänderung der zu messende Füllstand gleich dem zuvor gemessenen Füllstand gesetzt.

Gemäß einer Weiterbildung des letztgenannten Verfahrens weist das Fenster

- eine vorgegebene Breite auf, wenn der zuvor bestimmte Füllstand durch ein Echo gefunden wurde,
- eine um einen einer erhöhten Meßunsicherheit Rechnung tragenden Faktor vergrößerte Breite auf, wenn der zuvor bestimmte Füllstand durch Extrapolation gefunden wurde, oder
- eine Größe auf, bei der der im nächsten Meßzyklus zu messende Füllstand auch dann noch im Fenster liegt, wenn der Füllstand sich mit einer durch die Anordnung vorgegebenen maximalen Geschwindigkeit ändert, wenn der zuvor zu messende Füllstand gleich dem vorherigen aktuellen Füllstand gesetzt worden ist.

Die Erfindung und weitere Vorteile werden nun anhand der Figuren der Zeichnung, in denen drei Ausführungsbeispiele dargestellt sind, näher erläutert; gleiche Elemente sind in den Figuren mit gleichen Bezugszeichen versehen.

Fig. 1 zeigt eine      Anordnung zur Füllstandsmessung mit einem Füllstandsmeßgerät mit zwei Signaleingängen und intergrierter Hilfseinheit;

Fig. 2 zeigt eine      Anordnung mit einem an eine Busleitung angebundenen Füllstandsmeßgerät;

Fig. 3 zeigt eine      Anordnung mit einem Füllstandsmeßgerät mit einem Signaleingang, über den eine Hilfseinheit angeschlossen ist; und

Fig. 4 zeigt ein      Ablaufdiagramm für ein erfindungsgemäßes Verfahren zur Füllstandsmessung.

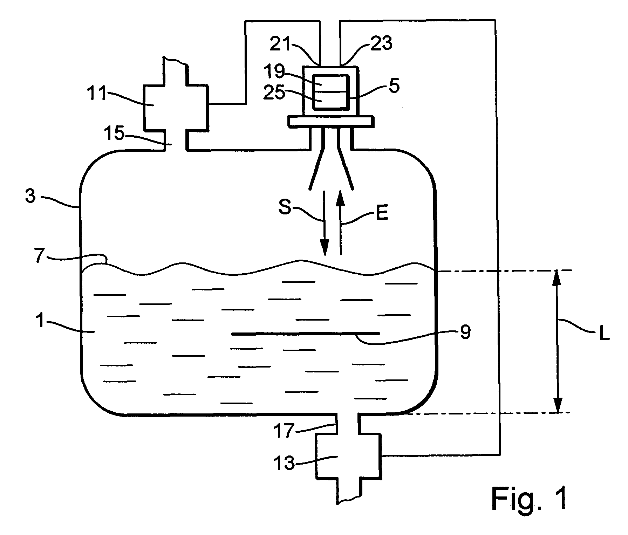

Fig. 1 zeigt eine Anordung zur Füllstandsmessung. Es ist ein mit einem Füllgut 1 gefüllter Behälter 3 dargestellt. Am Behälter 3 ist ein nach dem Laufzeitprinzip arbeitendes Füllstandsmeßgerät 5 angeordnet. Als Füllstandsmeßgerät eignet sich z.B. ein mit Mikrowellen arbeitendes Füllstandsmeßgerät oder ein mit Ultraschall arbeitendes Füllstandsmeßgerät. Das Füllstandsmeßgerät 5 dient dazu, einen Füllstand 7 des Füllguts 1 im Behälter zu messen. In dem Behälter 3 ist schematisch ein Störer 9 eingezeichnet. Störer 9 sind z.B. Einbauten im Behälter 3, Rührwerke und natürlich jede andere Struktur, an der Reflektionen auftreten können.

Bei der Füllstandsmessung nach dem Laufzeitprinzip werden periodische Sendesignale S in Richtung eines Füllgutes 1 ausgesendet. Es werden Echosignale E der Sendesignale S aufgenommen und daraus eine Echoamplituden A der Echosignale E als Funktion der Laufzeit t darstellende Echofunktion gebildet.

Erfindungsgemäß sind an dem Behälter 3 zusätzlich eine Vorrichtung zur Erfassung eines Befüllens 11 und/ oder Entleerens 13 des Behälters 3 vorgesehen.

Die Vorrichtung zur Erfassung des Befüllens 11 ist oben auf dem Behälter 3 an einem Befüllstutzen 15 des Behälters 3 angeordnet. Die Vorrichtung zur Erfassung des Enleerens 13 des Behälters 3 ist in dem dargestellten Ausführungsbeispiel unterhalb des Behälters 3 an einem Behälterauslaß 17 angeordnet.

Als Vorrichtungen zum Erfassen des Befüllens und/oder Entleerens 11, 13 des Behälters 3 eignen sichGeräte, die einen Materialfluß durch den Befüllstutzen 15 bzw. durch den Behälterauslaß 17 erfaßbar machen, z.B.

Durchflußmeßgeräte. Durchflußmeßgeräte bieten den Vorteil, daß sie sehr genaue Meßergebnisse liefern aus denen dann eine Füllstandsänderung berechenbar ist. Sie sind allerdings auch teuer und deshalb nicht in jeder Anwendung einsetzbar.

Alternativ können Befüll- und/oder Entleerpumpen eingesetzt werden. Bei Befüll- bzw. Entleerpumpen kann aus einer Information darüber, ob sie eingeschaltet sind oder nicht der Materialfluß grob bestimmt werden. Ist die Befüll- bzw. Entleerpumpe eingeschaltet steigt bzw. sinkt der Füllstand, ist sie ausgeschaltet stagniert der Füllstand. Ist zusätzlich eine Pumpleistung der Befüll- bzw. Entleerpumpen bekannt oder ableitbar, so folgt daraus eine Füll- bzw. Entleergeschwindigkeit aus der sich wiederum der Materialfluß ergibt.

Genauso können auch Fördereinrichtungen eingesetzt werden, z.B. Schnecken, Trogkettenförderer, Förderbänder, Gebläse zur pneumatischen Förderung oder automatisch betätigte Ventile. Hiermit läßt sich der Materialfluß grob bestimmen. Bei eingeschalteter Fördereinrichtung steigt bzw. fällt der Füllstand, bei ausgeschalteter Fördereinrichtung stagniert er. Ist zusätzlich die Förderleistung bekannt oder ableitbar, so kann der Materialfluß natürlich genauer bestimmt werden.

Die Förderleistung vieler Fördereinrichtungen wird durch Frequenzumrichter gesteuert, die an Drehstrommotoren angeschlossen sind. In diesen Fällen kann die Frequenz des Umrichters als Maß für die Förderleistung zur genaueren Bestimmung des Materialflusses herangezogen werden.

Es ist eine Hilfseinheit 19 vorgesehen, die die mittels des von der Vorrichtung 11, 13 erfaßten Befüllens und/oder Entleerens einen momentanen Materialfluß oder eine momentane Füllstandsänderung $\Delta L$ bestimmt und dem Füllstandsmeßgerät 5 zur Bestimmung des zu messenden Füllstandes L zur Verfügung stellt. Aus einem momentanen Füllstand und einer Form des Behälters, die üblicherweise in Form einer Behälterkennlinie vorliegt, ergibt sich aus dem momentanen Materialfluß unmittelbar die momentane Füllstandsänderung. Letztere kann entweder mittels der Hilfseinheit 19 oder durch das Füllstandsmeßgerät 5 bestimmt werden. Bei den meisten Anwendungen bietet es sich an, die momentane Füllstandsänderung durch das Füllstandsmeßgerät bestimmen zu lassen, da die Behälterkennlinie in der Regel ohnehin im Füllstandsmeßgerät 5 vorliegt.

In dem in Fig. 1 dargestellten Ausführungsbeispiel ist die Hilfseinheit 19 in dem Füllstandsmeßgerät 5 intergriert. Die integrierte Hilfseinheit 19 kann eine eigenständige physikalische Einheit sein; sie kann aber auch in Form eines auf einer Recheneinheit des Füllstandsmeßgeräts 5 zum Einsatz kommenden im Gerät abgespeicherten Softwaremoduls vorliegen.

Das Füllstandsmeßgerät 5 weist mindestens einen Signaleingang 21, 23 auf, über den dem Füllstandsmeßgerät 5 externe Informationen über die Füllstandsänderung $\Delta L$ oder den Materialfluß zuführbar sind. In dem in Fig. 1 dargestellten Ausführungsbeispiel sind zwei Signaleingänge 21, 23 vorgesehen. Über den Signaleingang 21 ist die Vorrichtung zur Erfassung des Befüllens 11 und über den Signaleingang 23 die Vorrichtung zur Erfassung des Entleerens 13 an das Füllstandsmeßgerät 5 angebunden. Sind die Vorrichtungen zum Erfassen des Befüllens und/oder Entleerens 11, 13 Durchflußmeßgeräte, so sind die externen Informationen die gemessenen Materialflüsse. Sind Befüll- bzw. Entleerpumpen oder Fördereinrichtungen im Einsatz, so sind die externen Informationen Informationen über den Zustand dieser Vorrichtungen, wie z.B. Vorrichtung eingeschaltet, Vorrichtung ausgeschaltet oder ein einer Pump- oder Förderleistung entsprechendes Signal. Aus diesen externen Informationen bestimmt die Hilfseinheit 19 die Füllstandsänderung $\Delta L$ oder den Materialfluß. Dabei wird aus den externen Informationen ein Materialfluß abgleitet, aus dem unter Berücksichtigung einer in dem Füllstandsmeßgerät bzw. in der Hilfseinheit 19 abgespeicherten Geometrie des Behälters 3 und einem in einem vorangegangenen Meßzyklus gemessenen Füllstand die Füllstandsänderung $\Delta L$ berechnet wird. Die Berechnung kann durch das Füllstandsmeßgerät 5 oder durch die Hilfseinheit 19 erfolgen.

Bei einer Inbetriebnahme der Anordnung steht natürlich noch kein in einem vorangegangenen Messzyklus gemessener Füllstand zur Verfügung. Hier kann stattdessen ein zuvor auf andere Weise, z.B. durch Loten, ermittelter Füllstand eingespeist werden.

Alternativ kann ein Initialisierungsmodus vorgeschaltet werden, indem mit dem Füllstandsmeßgerät auf herkömmliche Weise der Füllstand gemessen wird. Ein auf diese Weise bestimmter Startwert für den Füllstand wird im Füllstandsmeßgerät 5 abgespeichert und steht im nachfolgenden Messzyklus als Füllstand zur Verfügung.

Das Füllstandsmeßgerät 5 weist eine Signalverarbeitung 25 auf, die in jedem Messzyklus aus einem Meßsignal und der durch die Hilfseinheit 19 oder das Füllstandsmeßgerät 5 bereitgestellten Füllstandsänderung $\Delta L$ den zu messenden Füllstand L bestimmt.

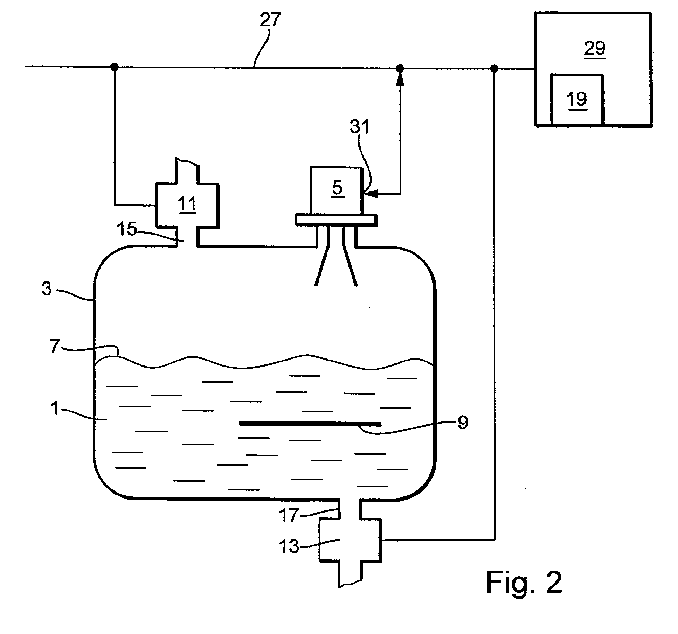

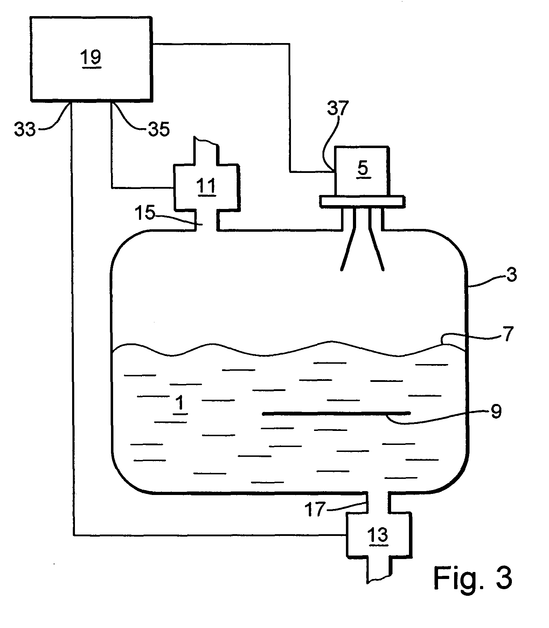

Die Figuren 2 und 3 zeigen zwei weitere Ausführungsbeispiele für erfindungsgemäße Anordnungen zur Füllstandsmessung. Aufgrund der großen Übereinstimmung zum zuvor beschriebenen Ausführungsbeispiel werden nachfolgend lediglich die bestehenden Unterschiede näher erläutert.

Bei dem in Fig. 2 dargestellten Ausführungsbeispiel sind sowohl das Füllstandsmeßgerät 5 als auch die Vorrichtung zum Erfassen des Befüllens bzw. Entleerens 11, 13 über eine Busleitung 27 an eine übergeordnete Einheit 29, z.B. ein Prozeßleitsystem oder eine speicherprogrammierbare Steuerung, angeschlossen.

Übergeordnete Einheiten sind besonders auf großen Anlagen häufig ohnehin vorgesehen und bieten hier den Vorteil, daß kein zusätzlicher Verdrahtungsaufwand entsteht. Das Füllstandsmeßgerät 5 und Vorrichtungen zum Befüllen bzw. Entleeren des Behälters 3, z.B. Pumpen oder Fördereinrichtungen, sind auf solchen Anlagen in der Regel ohnehin vorgesehen und über die Busleitung 27 an die übergeordnete Einheit 29 angeschlossen. Diese Vorrichtungen können ohne zusätzlichen Aufwand gleichzeitig als Vorrichtungen zum Erfassen des Befüllens- und/oder Entleerens 11, 13 des Behälters 3 eingesetzt werden, indem in der übergeordneten Einheit 29 in der Regel ohnehin vorhandene Informationen über deren Betriebsmodus (Fördereinrichtung in Betrieb/nicht in Betrieb, Pumpleistung, Förderleistung o.ä.) der Hilfseinheit 19 zugeführt werden. Die Hilfseinheit 19 kann sich, wie in Fig. 2 dargestellt, in der übergeordneten Einheit 29 befinden. Alternativ kann die Hilfseinheit 19 natürlich genau wie bei dem in Fig. 1 dargestellten Ausführungsbeispiel in dem Füllstandsmeßgerät 5 befinden und über die übergeordnete Einheit 29 und die Busleitung 27 gespeist werden.

Das Füllstandsmeßgeräts 5 weist einen einzigen Signaleingang 31 auf, über den es die externen Informationen über den Materialfluß oder die Füllstandsänderung $\Delta L$ von der übergeordneten Einheit 29 aufnimmt. Vorzugsweise erfolgt über diese Verbindung zur übergeordneten Einheit 29 auch die Anbindung des Füllstandsmeßgeräts 5 an die übergeordnete Einheit 29, so daß auch Meßergebnisse des Füllstandsmeßgeräts 5, Statusinformationen, Fehlermeldungen und ähnliche Informationen über diese eine Verbindung austauschbar sind. Hierzu sind alle bidirektionalen Busprotokolle geeignet.

Fig. 3 zeigt ein weiteres Ausführungsbeispiel einer erfindungsgemäßen Anordnung. Der einzige Unterschied zu dem in Fig. 1 dargestellten Ausführungsbeispiel besteht darin, daß die Hilfseinheit 19 eine eigenständige Einheit ist. Sie ist nicht, wie in Fig. 1 dargestellt im Füllstandsmeßgerät 5 integriert, sondern separat angeordnet.

Die Hilfseiheit 19 ist direkt an die Vorrichtungen zum Erfassen- und/oder Entleeren 11, 13 des Behälters 3 angeschlossen und weist hierfür eine entsprechende Anzahl von Signaleingängen 33, 35 auf. Das Füllstandsmeßgerät 5 braucht in diesem Fall nur einen einzigen Signaleingang 37, über die die Hilfseinheit 19 dem Füllstandsmeßgerät 5 den Materialfluß oder die Füllstandsänderung zur Verfügung stellt.

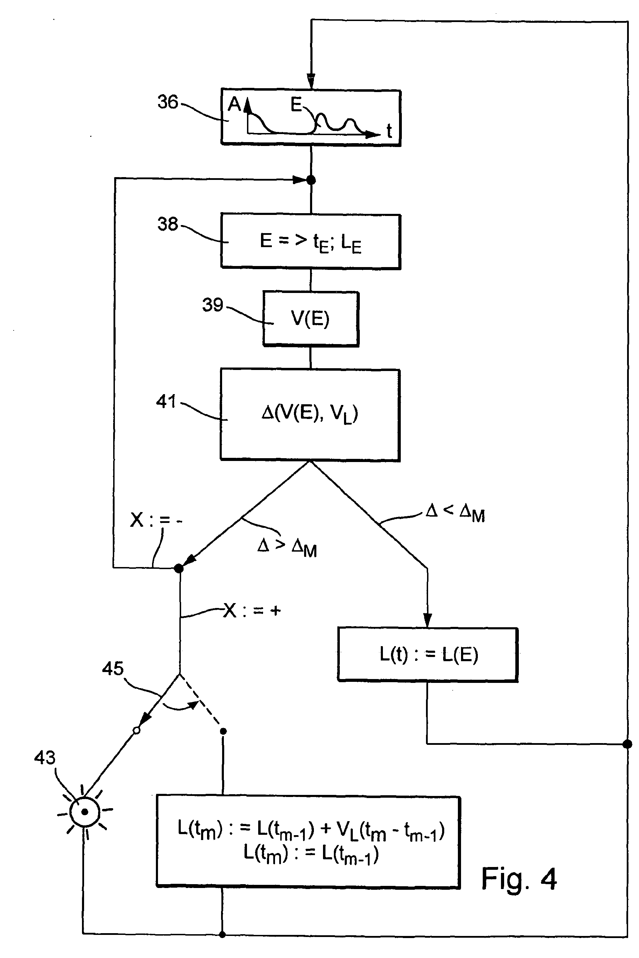

Die zuvor beschriebenen erfindungsgemäßen Anordnungen zur Füllstandsmessung werden mit einem Verfahren zur Füllstandsmessung betrieben, das in Fig. 4 in einem Ablaufdiagramm schematisch dargestellt ist.

Es wird ein Sendesignal, z.B. ein kurzer Mikrowellenpuls beim Puls-Radar-Füllstandsmeßgerät, von dem Füllstandsmeßgerät 5 zum Füllgut gesendet und es wird dessen Echosignal aufgenommen. Nachfolgend wird das Verfahren am Beispiel des Puls-Radar-Verfahrens erläutert. Es ist jedoch analog auch bei anderen nach dem Laufzeitprinzip arbeitenden Meßverfahren einsetzbar.

Es wird eine in Fig. 4 in der Box 36 schematisch dargestellte die Echoamplituden A als Funktion der Laufzeit t darstellende Echofunktion gebildet. Jeder Wert dieser Echofunktion entspricht der Amplitude eines in einem bestimmten Abstand von der Antenne entstehenden Echos. Da die Laufzeit proportional zum Abstand eines Reflektors von der Antenne ist, gibt die Echofunktion die Signalstärke aller Echos in Abhängigkeit von dem Abstand der zugehörigen Reflektoren von der Antenne an.

Aus der Echofunktion wird mindestens ein Echo E bestimmt. Dabei kann auf alle herkömmlichen Verfahren zur Echobestimmung zurückgegriffen werden. Dabei kann z.B. angenommen werden, daß ein durch Reflexion an der Füllgutoberfläche entstehendes Echo E, eine größere Amplitude aufweist, als die übrigen Echos. Entsprechend wird dann dasjenige Echo E ausgewählt, das die größte Amplitude aufweist. Alternativ kann z.B. die Echofunktion zunächst mit einer Wahrscheinlichkeitsfunktion überlagert werden, und aus der resultierenden Funktion ein Echo E ausgewählt werden, oder es kann das erste Echo E ausgewählt werden. Die Echos E werden danach ausgewählt, daß sich wahrscheinlich das gesuchte an der Füllgutoberfläche reflektierte Echo unter ihnen befindet.

Aus der Laufzeit $t_E$ dieser bzw. dieses Echos ergibt sich bei einer festen Ausbreitungsgeschwindigkeit des Sendesignals unmittelbar ein Abstand zwischen den jeweiligen Reflektoren und der Antenne. Einer der Reflektoren ist natürlich die Füllgutoberfläche. Aus der Laufzeit $t_E$ des durch Reflexion an der Füllgutoberfläche entstehenden Echos E wird ein vorläufiger Füllstand $L_E$ bestimmt. Dies ist im Ablaufdiagramm in der Box 38 eingezeichnet.

In einem nächsten Schritt 39, wird aus dem vorläufigen Füllstand $L_E$ und mindestens einem weiteren in einem vorangegangenen Meßzyklus gemessenen Füllstand eine gemessene Füllstandsänderung V(E) bestimmt. Hierzu wird eine Differenz des Füllstands $L_E$ und des im vorangegangenen Meßzyklus gemessenen Füllstand L gebildet und durch die zwischen beiden Messungen verstrichene Zeit dividiert. Üblicherweise wird in konstanten Zeitabständen gemessen, so daß die verstrichene Zeit eine Konstante ist, die im Füllstandsmeßgerät 5 abgespeichert ist. Die verstrichene Zeit kann aber auch variabel sein und z.B. mittels einer im Füllstandsmeßgerät 5 integrierten Uhr oder einem integrierten Zähler erfaßt werden.

Bei einer Inbetriebnahme der Anordnung steht natürlich noch kein in einem vorangegangenen Messzyklus gemesssener Füllstand zur Verfügung. Hier kann stattdessen ein zuvor auf andere Weise, z.B. durch Loten, ermittelter Füllstand eingespeist werden.

Alternativ kann ein Initialisierungsmodus vorgeschaltet werden, in dem mit dem Füllstandsmeßgerät auf herkömmliche Weise der Füllstand solange gemessen wird, bis ein zuverlässiger Meßwert vorliegt. Ein auf diese Weise bestimmter Startwert für den Füllstand wird im Füllstandsmeßgerät 5 abgespeichert und steht im nachfolgenden Messzyklus als Füllstand zur Verfügung.

Die Hilfseinheit 19 bestimmt in jedem Meßzyklus mittels der von den Vorrichtungen 11, 13 erfaßten Informationen über das Befüllen und/oder Entleeren des Behälters 3 eine momentane Füllstandsänderung $V_L$.

Im nächsten Schritt 41 wird eine Abweichung $\Delta(V(E); V_L)$ zwischen der gemessenen Füllstandsänderung V(E) und der momentanen Füllstandsänderung $V_L$ bestimmt.

Die Abweichung $\Delta(V(E); V_L)$ wird mit einer vorgegebenen Obergrenze $\Delta_M$ verglichen. Sind zuvor mehrere Echos E ausgewählt worden, so werden die zuvor genannten Verfahrensschritte für jedes einzelne Echo E durchgeführt. Anschließend wird dasjenige Echo E ausgewählt, das die geringste Abweichung $\Delta(V(E); V_L)$ aufweist. Wenn die Abweichung $\Delta(V(E); V_L)$ die Obergrenze $\Delta_M$ übersteigt wird wieder auf die Echofunktion zurückgegriffen und mindestens ein anderes Echo E' als wahrscheinlich an der Füllgutoberfläche reflektiertes Echo E bestimmt. Für dieses Echo E' werden erneut die Verfahrensschritte 38, 39 und 41 durchlaufen.

Das Echo E' kann beispielsweise dasjenige Echo der Echofunktion mit der nächstniedrigeren Amplitude sein. Alternativ kann nach dem ersten Durchlauf die Echofunktion systematisch nach möglichen Echos abgesucht werden, indem an einem Ende begonnen wird, und Echo für Echo jeweils in einem Durchlauf die Abweichung $\Delta(V(E); V_L)$

überprüft wird.

Dieses Verfahren wird so lange wiederholt, bis ein Echo gefunden ist, bei dem die Abweichung $\Delta(V(E); V_L)$ unterhalb der vorgegebenen Obergrenze $\Delta_M$ liegt oder bis eine Abbruchbedingung X eintritt. Das eintreten der Abruchbedingung in Fig. 4 symbolisch durch X:= + dargestellt, deren Nichteintreten durch X:= -.

Wenn in dem ersten Durchlauf bereits alle Echos ausgewählt wurden, entfällt dieser zweite Durchlauf natürlich.

Wird durch das Verfahren ein Echo E gefunden, bei dem die Abweichung $\Delta(V(E); V_L)$ unterhalb der vorgegebenen Obergrenze $\Delta_M$ liegt, so wird der diesem Echo E entsprechende vorläufige Füllstand $L_E$ als gemessener Füllstand L akzeptiert und für einen nachfolgenden Meßzyklus gespeichert. Der gemessene Füllstand L bildet im nachfolgenden Meßzyklus den im vorangegangenen Meßzyklus gemessenen Füllstand.

Als Abbruchbedingungen X eignen sich je nach Anwendung verschiedene Kriterien, die beispielsweise als vom Anwender wählbare Optionen in Form eines Programmmoduls in der Signalverarbeitung oder an anderer Stelle im Füllstandsmeßgerät 5 in geeigneten Speichern vorliegen können.

Ein Beispiel für eine Abbruchbedingung X ist eine vorgegebene Anzahl n von Durchlaufen. Wird mittels dieser Anzahl Durchläufe kein Echo E mit einer passenden Laufzeit gefunden, tritt die Abbruchbedingung X ein. Alternativ kann das Verfahren solange durchlaufen werden, bis für jedes Echos der Echofunktion ein Durchlauf durchgeführt worden ist.

Für den Fall, daß die Abbruchbedingung X eintritt, X:= X+, kann in einen Sicherheitsmodus 43 geschaltet werden. Im Sicherheitsmodus 43 meldet das Füllstandsmeßgerät 5 einen Fehler und/oder meldet einen sicherheitsgerichten vorbestimmten Füllstand. Letzterer ist so auszuwählen, daß ein eventuell bestehendes Unfallrisiko, z.B. ein Überfüllen des Behälters 3 oder ein Leerlaufen von Pumpen o. ä. ausgeschlossen ist.

Alternativ kann bei bekannter momentaner FÜllstandsänderung $V_L$ der zu messende Füllstand L aus dem zuvor gemessenen Füllstand und der momentanen Füllstandsänderung V(L) extrapoliert werden. Dies kann z.B. gemäß der Formel

$$L\,(t_m) := L(t_{m-1}) + V_L{}^* (t_{m\,-}\,t_{m-1})$$

geschehen, wobei

| | |
|---|---|
| $L\,(t_m)$ | der zu messende Füllstand, |
| $V_L$ | die momentande Füllstandsänderung, |
| $t_m$ | der Zeitpunkt der aktuellen Messung, |
| $t_{m-1}$ | der Zeitpunkt der vorangegangenen Messung, und |
| $t_m\text{-}t_{m-1}$ | die zwischen den beiden Meßzyklen liegende Zeitspanne bedeuten. |

Ist die momentane Füllstandsänderung $V_L$ unbekannt, kann der zu messende Füllstand L gleich dem zuvor gemessenen Füllstand gesetzt werden.

Vorzugsweise ist eine Wahlmöglichkeit gegeben, wie sie durch den Schalter 45 in Fig. 4 angedeutet ist. Hierbei kann der Anwender, z.B. durch entsprechende Programmauswahl bei der Inbetriebnahme wählen, ob das Füllstandsmeßgerät 5 in den Sicherheitsmodus 43 schaltet oder einen durch Extrapolation oder Gleichsetzung angenäherten Füllstand bestimmt.

Am Ende eines jeden vollständig durchlaufenen Meßzyklus wird der zu messende Füllstand L für den nächsten Meßzyklus als gemessener Füllstand abgespeichert. Zusätzlich stellt das Füllstandsmeßgerät 5 den gemessenen Füllstand für eine Verarbeitung, Auswertung und/oder Anzeige zur Verfügung.

Wird im Verlauf eines Meßzyklus in den Sicherheitsmodus 43 geschaltet und kein angenäherter Füllstandswert bestimmt, so wird vom Füllstandsmeßgerät 5 vorzusweise ein Alarmsignal ausgegeben. Zusätzlich wird der im vorherigen Meßzyklus gemessene Füllstand als gemessener Füllstand gespeichert, damit im nächsten Meßzyklus ein in einem vorherigen Meßzyklus gemessener Füllstand zur Verfügung steht.

Bei dem Verfahren, wie es an Hand des Ablaufdiagramms von Fig. 4 beschrieben ist, können zusätzlich Fenster definiert und eingesetzt werden. Beim Puls-Radar-Verfahren sind diese Fenster Zeitfenster, beim frequenzmodulierten Dauerstrichradar-Verfahren wären es Frequenzbereiche.

Ein Fenster ist ein Abschnitt auf der Echofunktion, in dem das wahrscheinlich an der Füllgutoberfläche reflektierte Echo gesucht wird. Eine Lage des Fensters ist vorzugsweise durch die dem zuvor gemessenen Füllstand entsprechende Laufzeit gegeben. Dabei ist das Fenster vorzugsweise so anzusetzen, daß die dem zuvor gemessenen Füllstand entsprechende Laufzeit in der Mitte des Fensters liegt.

Das Verfahren wird völlig analog zu dem anhand des Ablaufdiagramms von Fig. 4 beschriebenen Verfahren durchgeführt, wobei jedoch das Echo E immer nur innerhalb des jeweils gültigen Fensters gesucht wird. Außerhalb des Fensters liegende Echos werden nicht berücksichtigt. Wird innerhalb des Fensters kein geeignetes Echo gefunden, so wird dies als Eintritt einer Abbruchbedingung gewertet.

Wird innerhalb des Fensters kein Echo E gefunden, das zu einem gemessenen Füllstand L führt, so wird, vorzugsweise wahlweise, in den Sicherheitsmodus 43 geschaltet oder bei bekannter momentaner Füllstandsänderung ΔL der zu messende Füllstand aus dem zuvor gemessenen Füllstand und der momentanen Füllstandsänderung extrapoliert, oder bei unbekannter momentaner Füllstandsänderung der zu messende Füllstand gleich dem zuvor gemessenen Füllstand gesetzt.

Die Fenster weisen eine Breite auf, bei der unter normalen Meßbedingungen davon auszugehen ist, daß das im nächsten Meßzyklus von der Reflektion an der Füllgutoberfläche zu erwartende Echo sicher innerhalb des Fensters liegt. Dabei kann die Breite des Fensters, z.B. aus einer maximal möglichen Füllstandsänderung berechnet oder durch Schätzung ermittelt werden. Diese Breite wird als vorgegebene Breite im Gerät abgespeichert.

Wurde im laufenden Meßbetrieb der zuvor bestimmte Füllstand durch einen Echopuls gefunden, so wird für den nächsten Meßzyklus die Breite des Fensters gleich der vorgegebene Breite gesetzt.

Konnte dagegen der zuvor bestimmte Füllstand nicht durch ein Echo bestimmt werden, so besteht eine zusätzliche Meßunsicherheit, der bei der Wahl der Breite des Fensters für den nachfolgenden Meßzyklus Rechnung getragen werden muß.

Wurde der zuvor bestimmte Füllstand durch Extrapolation gefunden, so wird vorzugsweise ein Fenster ausgewählt, das eine um einen einer erhöhten Meßunsicherheit Rechnung tragenden Faktor vergrößerte Breite aufweist.

Ist der gemessene Füllstand gleich dem vorherigen aktuellen Füllstand gesetzt worden, dann wird vorzugsweise ein Fenster ausgewählt, das eine Größe aufweist, bei der der im nächsten Meßzyklus zu messende Füllstand auch dann noch im Fenster liegt, wenn der Füllstand sich mit einer durch die Anordnung vorgegebenen maximalen Geschwindigkeit ändert.

Fenster bieten den Vorteil, daß nur ein innerhalb des Fensters liegender Ausschnitt der Echofunktion aufgenommen und ausgewertet werden muß. Dies spart Zeit und Rechenleistung.

Durch die Vorrichtungen zur Erfassung eines Befüllens und/oder Entleerens 11, 13 des Behälters 3 und die Hilfseinheit 19 steht die momentane Füllstandsänderung dem Füllstandsmeßgerät 5 zur Verfügung.

Die Kenntnis der momentanen Füllstandsänderung erleichtert das Finden des Füllstandes. Kann das Echo E durch die Füllstandsmessung nicht eindeutig identifiziert werden, so kann anhand der zur Verfügung stehenden momentanen Füllstandsänderung aus den möglichen Echos das richtige Echo E ausgewählt werden, indem, wie oben beschrieben, ein Vergleich der momentanen Füllstandsänderung mit der sich für die jeweiligen Echos ergebenden gemessenen Füllstandsänderung ausgeführt wird.

Gelangt das richtige Echo E in den Bereich eines Störechos, von dem es nicht mehr unterschieden werden kann, so kann während dieser Zeit der Füllstand anhand der momentanen Füllstandsänderung weiterhin annähernd richtig berechnet und ausgegeben werden.

Wird ein Fenster eingesetzt, so wird die Lage des Fensters durch den zuvor gemessenen Füllstand festgelegt. Hierbei bietet die durch die Einbeziehung der momentanen Füllstandsänderung erzielte erhöhte Sicherheit bei der Bestimmung des gemessenen Füllstands den Vorteil, daß sichergestellt ist, daß das Echo E immer innerhalb des Fensters liegt.

**Patentansprüche**

1. Anordnung zur Füllstandsmessung mit

   - einem mit einem Füllgut (1), dessen Füllstand zu messen ist, gefüllten Behälter (3),
   - einem an dem Behälter (3) angeordneten nach dem Laufzeitprinzip arbeitenden Füllstandsmeßgerät (5),
   - einer Vorrichtung (11, 13) zur Erfassung eines Befüllens und/oder Entleerens des Behälters (3),
   - einer Hilfseinheit (19), die mittels des von der Vorrichtung (11, 13) erfaßten Befüllens und/oder Entleerens eine momentane Füllstandsänderung ($V_L$) oder einen momentanen Materialfluß bestimmt und dem Füllstandsmeßgerät (5) zur Bestimmung des zu messenden Füllstandes (L) zur Verfügung stellt.

2. Anordnung nach Anspruch 1, bei der die Vorrichtung (11, 13) zur Erfassung des Befüllens- und/oder Entleerens

   - mindestens ein Durchflußmeßgerät,
   - eine Befüll- und/oder Entleerpumpe, oder
   - eine Fördereinrichtung umfaßt.

3. Anordnung nach Anspruch 1, bei der das Füllstandsmeßgerät (5)

- mindestens einen Signaleingang (21, 23, 31, 37) aufweist, über den dem Füllstandsmeßgerät (5) externe Informationen über die momentane Füllstandsänderung ($V_L$) oder den momentanen Materialfluß zuführbar sind, und
- eine Signalverarbeitung (25) aufweist, die aus einem Meßsignal und der momentanten Füllstandsänderung ($V_L$) oder dem momentanen Materialfluß den zu messenden Füllstand (L) bestimmt.

4. Verfahren zur Füllstandsmessung mit einer Anordnung zur Füllstandmessung mit

- einem am Behälter (3) angeordneten nach dem Laufzeitprinzip arbeitenden Füllstandsmeßgerät (5),
- einer Vorrichtung (11, 13) zur Erfassung eines Befüllens und/oder Entleerens des Behälters (3), und
- einer Hilfseinheit (19), die mittels des von der Vorrichtung (11, 13) erfaßten Befüllens und/oder Entleerens die momentane Füllstandsänderung ($V_L$) oder den momentanen Materialfluß bestimmt, bei dem
- ein Sendesignal (S) zum Füllgut (1) gesendet wird,
- dessen Echosignal (E) aufgenommen wird,
- mindestens ein Echo (E) des Echosignals (E) bestimmt wird,
- aus einer Laufzeit ($t_E$) dieses bzw. dieser Echos (E) ein vorläufiger Füllstand ($L_E$) bestimmt wird,
- aus dem vorläufigen Füllstand ($L_E$) und mindestens einem weiteren in einem vorangegangenen -Meßzyklus gemessenen Füllstand (L) eine gemessene Füllstandsänderung (V(E)) bestimmt wird,
- eine Abweichung ($\Delta$(V(E); $V_L$) zwischen der gemessenen Füllstandsänderung (V(E))und der momentanen Füllstandsänderung ($V_L$) bestimmt wird und
- wenn die Abweichung ($\Delta$(V(E); $V_L$) eine vorgegebene Obergrenze ($\Delta_M$) übersteigt, mindestens ein anderes Echo (E') als wahrscheinlich an der Füllgutoberfläche reflektiertes Echo (E') bestimmt wird, und
- dieses Verfahren so lange wiederholt wird, bis

- - ein Echo (E) gefunden ist, bei dem die Abweichung ($\Delta$(V(E); $V_L$) unterhalb der vorgegebenen Obergrenze ($\Delta_M$) liegt und der diesem Echo (E) entsprechende vorläufige Füllstand ($L_E$) als gemessener Füllstand (L) akzeptiert wird, oder bis
- - eine Abbruchbedingung (X) eintritt.

5. Verfahren nach Anspruch 4, bei dem
für den Fall, daß die Abbruchbedingung (X) eintritt

- in einen Sicherheitsmodus (43) geschaltet wird, oder
- bei bekannter momentaner Füllstandsänderung ($V_L$) der zu messende Füllstand aus dem zuvor gemessenen Füllstand (L) und der momentanen Füllstandsänderung ($V_L$) extrapoliert wird, und
- bei unbekannter momentaner Füllstandsänderung ($V_L$) der zu messende Füllstand gleich dem zuvor gemessenen Füllstand (L) gesetzt wird.

6. Verfahren nach Anspruch 4, bei dem
in jedem Meßzyklus das wahrscheinlich an der Füllgutoberfläche reflektierte Echo innerhalb eines Fensters gesucht wird, wobei die Lage des Fensters durch die dem zuvor gemessenen Füllstand (L) entsprechende Laufzeit gegeben ist.

7. Verfahren nach Anspruch 6, bei dem
für den Fall, daß innerhalb des Fensters kein Echo (E) gefunden werden kann, das zu einem gemessenen Füllstand (L) führt,

- bei bekannter momentaner Füllstandsänderung ($V_L$) der zu messende Füllstand aus dem zuvor gemessenen Füllstand (L) und der momentanen Füllstandsänderung ($V_L$) extrapoliert wird, und
- bei unbekannter momentaner Füllstandsänderung ($V_L$) der zu messende Füllstand gleich dem zuvor gemessenen Füllstand (L) gesetzt wird.

8. Verfahren nach Anspruch 7, bei dem das Fenster

- eine vorgegebene Breite aufweist, wenn der zuvor bestimmte Füllstand (L) durch ein Echo gefunden wurde,
- eine um einen einer erhöhten Meßunsicherheit Rechnung tragenden Faktor vergrößerte Breite aufweist, wenn der zuvor bestimmte Füllstand (L) durch Extrapolation gefunden wurde, oder

- eine Größe aufweist, bei der der im nächsten Meßzyklus zu messende Füllstand auch dann noch im Fenster liegt, wenn der Füllstand sich mit einer durch die Anordnung vorgegebenen maximalen Geschwindigkeit ändert, wenn der zuvor zu messende Füllstand gleich dem vorherigen aktuellen Füllstand gesetzt worden ist.

Fig. 1

Fig. 2

Fig. 3

EP 1 489 393 A2

Fig. 4